(19) **Europäisches Patentamt / European Patent Office / Office européen des brevets**

(11) **EP 4 028 795 B1**

(12) **FASCICULE DE BREVET EUROPÉEN**

(45) Date de publication et mention de la délivrance du brevet:
**09.07.2025 Bulletin 2025/28**

(21) Numéro de dépôt: **19797322.5**

(22) Date de dépôt: **12.09.2019**

(51) Classification Internationale des Brevets (IPC):
*G01S 19/50* (2010.01)    *G01S 19/22* (2010.01)

(52) Classification Coopérative des Brevets (CPC):
**G01S 19/50; G01S 19/22**

(86) Numéro de dépôt international:
**PCT/FR2019/000146**

(87) Numéro de publication internationale:
**WO 2021/048471 (18.03.2021 Gazette 2021/11)**

(54) **DISPOSITIF ET PROCÉDÉ DE LOCALISATION AUTONOME D'UN VÉHICULE MOBILE SUR UNE VOIE FERRÉE**

VORRICHTUNG UND VERFAHREN ZUR AUTONOMEN ORTUNG EINES MOBILEN FAHRZEUGES AUF EINEM EISENBAHNGLEIS

DEVICE AND METHOD FOR AUTONOMOUS LOCALIZATION OF A MOBILE VEHICLE ON A RAILWAY TRACK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**20.07.2022 Bulletin 2022/29**

(73) Titulaire: **GTS France**
**78140 Velizy Villacoublay (FR)**

(72) Inventeurs:
• **LAVIRON, Philippe**
**78140 Velizy-Villacoublay (FR)**
• **FERRERO, Cédrik**
**33600 Pessac (FR)**
• **SONG, Yuxiang**
**33600 Pessac (FR)**
• **SIMEON, Jennifer**
**33600 Pessac (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**GB-A- 2 480 102     KR-A- 20160 121 453**

• **JIANG SHUXIAN ET AL: "GNSS NLOS Signal Modeling and Quantification Method in Railway Urban Canyon Environment", 2019 IEEE INTELLIGENT VEHICLES SYMPOSIUM (IV), IEEE, 9 June 2019 (2019-06-09), pages 1268 - 1273, XP033606187, DOI: 10.1109/IVS.2019.8814194**

EP 4 028 795 B1

## Description

### Art Antérieur

La présente invention concerne généralement les systèmes de localisation et en particulier un dispositif et un procédé de localisation autonome de véhicule mobile dans un réseau ferroviaire comprenant au moins une voie ferrée en utilisant une base de données cartographique.

La localisation d'un véhicule ferroviaire se déplaçant sur des voies ferrées d'un réseau ferroviaire s'effectue généralement de manière non autonome à partir de capteurs, dits 'capteurs à la voie', déployés tout au long des voies ferrées. Un véhicule ferroviaire peut être localisé en utilisant une technique d'odométrie entre deux capteurs à la voie successifs. La localisation peut s'effectuer dans un référentiel ferroviaire en déterminant le tronçon de la voie ferrée sur lequel le véhicule ferroviaire se trouve. La localisation retournée peut être qualifiée d'intègre si le risque que le véhicule ferroviaire ne soit pas sur le tronçon déterminé est inférieur à une limite acceptable. Une technique de localisation combinant des capteurs à la voie et l'odométrie est d'autant plus intègre que la distance séparant deux capteurs à la voie successifs est faible. Cependant, une telle technique de localisation connue est coûteuse à déployer et implique des coûts de maintenance élevés.

Dans d'autres approches existantes, des systèmes de localisation intègres et autonomes pouvant s'affranchir du déploiement de capteurs à la voie ont été proposés. La localisation fournie par de tels systèmes de localisation peut s'effectuer dans un référentiel terrestre au moyen d'un dispositif de localisation équipant le véhicule ferroviaire qui reçoit et traite des signaux de navigation émis par des satellites de géolocalisation tels que des satellites de type GPS (acronyme pour 'Global Positioning System' signifiant littéralement 'Système Mondial de Positionnement") et GNSS (acronyme pour 'Global Navigation Satellite System' signifiant littéralement 'Système Satellite Mondial de Navigation'). Le passage d'une localisation dans un référentiel terrestre à une localisation dans un référentiel ferroviaire peut s'effectuer en utilisant une base de données cartographique du réseau ferroviaire. Une telle base de données cartographique comprend les coordonnées géographiques de différents éléments du réseau ferroviaire tels que les voies ferrées. La base de données cartographique peut en outre comprendre une description de certains éléments de l'environnement adjacent au réseau ferroviaire susceptibles de perturber les signaux de navigation reçu par le véhicule ferroviaire. L'intégrité de tels systèmes de localisation autonomes dépend donc de l'intégrité de la base de données cartographique utilisée.

Un exemple de système de location utilisant une base de données cartographique a été décrit par exemple dans GB 2480102.

La construction d'une base de données cartographique intègre nécessite des mesures topographiques à effectuer sur le réseau ferroviaire et sur son environnement adjacent avant de procéder au traitement du nuage de points de mesure ainsi obtenu pour modéliser des éléments du réseau ferroviaire et certains objets de l'environnement adjacent. Un tel traitement requière un classement de chaque point de mesure selon qu'il caractérise le réseau ferroviaire ou son environnement adjacent.

La classification des points de mesure s'effectue généralement de manière manuelle. Cependant, une telle classification manuelle est complexe à réaliser et coûteuse en temps. Le traitement des points classifiés doit être ensuite effectué par des dispositifs dont les ressources en termes de mémoires de stockage et de vitesse de calcul sont souvent insuffisantes pour manipuler efficacement le volume de données important (de l'ordre du Téraoctet) correspondant aux points classifiés. Il en résulte une diminution de la fiabilité et du temps de réponse du dispositif de localisation de véhicule utilisant une telle base de données.

La modélisation des voies ferrées d'un réseau ferroviaire est souvent faite à l'aide d'outils de conception assistée par ordinateur (CAD) initialement conçus pour modéliser les infrastructures routières. Une application ferroviaire requière une précision sub-décamétrique lors de l'acquisition de données topographiques et un rayon de protection caractérisant l'ellipsoïde d'erreur de quelques mètres. Cependant, l'exigence d'une application ferroviaire en termes d'intégrité est très élevée (de l'ordre de $10^{-7}$ défauts par heure). D'autre part, la modélisation des voies ferrées ne suffit pas pour reconstruire la topologie du réseau ferroviaire qui nécessite l'identification d'autres éléments du réseau ferroviaire tels que les jonctions. Les outils de conception requièrent une expertise et un savoir-faire accrus de la part de l'utilisateur. Plusieurs manipulations sont nécessaires pour extraire les informations de mesures d'acquisition.

Par ailleurs, les outils existants ne permettent pas de reconstruire efficacement la topologie d'un réseau ferroviaire à partir d'un nuage de points de mesure géo-localisé et classifié, en tenant compte des spécificités de l'application ferroviaire.

Pour modéliser certains objets de l'environnement adjacent au réseau ferroviaire, il existe des outils à base d'apprentissage capables d'extraire et de modéliser ces objets à partir d'un nuage de points de mesure géo-localisé et classifié. De tels outils permettent de reconnaitre des objets de l'environnement adjacent. Cependant, les fonctionnalités de tels outils se limitent à extraire des objets de l'environnement adjacent et ne permettent pas d'analyser leurs effets sur les signaux de navigation reçus par un véhicule ferroviaire se déplaçant à leur proximité.

Il existe donc un besoin pour un dispositif et un procédé améliorés de localisation de véhicule dans un réseau ferroviaire.

## Définition générale de l'invention

L'invention vient améliorer la situation en proposant un procédé et un système de localisation dans un référentiel ferroviaire d'un véhicule mobile se déplaçant sur des voies ferrées d'un réseau ferroviaire selon les revendications indépendantes 1 et 13.

D'autres modes de réalisation sont définis dans les revendications dépendantes.

Les modes de réalisation de l'invention fournissent ainsi un procédé et un dispositif permettant une localisation précise et intègre d'un véhicule mobile se déplaçant sur les voies ferrées d'un réseau ferroviaire. Une telle localisation peut être garantie à chaque point du réseau ferroviaire et à chaque instant. Elle s'effectue avantageusement avec un temps de réponse optimal et une complexité de calcul réduite grâce à la prise en compte des particularités des réseaux ferroviaires en termes de précision et d'intégrité.

## Brève description des dessins

D'autres caractéristiques et avantages de l'invention apparaîtront à l'aide de la description qui suit et des figures des dessins annexés dans lesquels:

- La Figure 1 représente un système de localisation de véhicules mobiles se déplaçant dans un réseau ferroviaire selon des modes de réalisation de l'invention,
- La Figure 2 est un organigramme représentant les étapes du procédé de génération de la base de données cartographique,
- La Figure 3 est un organigramme représentant les étapes mises en œuvre pour déterminer la topologie d'un réseau ferroviaire et la modélisation de la géométrie de voies ferrées du réseau, selon certains modes de réalisation de l'invention,
- La Figure 4 est un organigramme représentant les étapes mises en œuvre pour déterminer des vecteurs géo-spatiales à partir d'un nuage de points de mesure géo-localisés et classifiés, selon certains modes de réalisation de l'invention,
- La Figure 5 est un organigramme représentant les étapes mises en œuvre pour modéliser la géométrie d'un segment d'une voie ferrée, selon certains modes de réalisation de l'invention,
- La Figure 6 est un organigramme représentant les étapes mises en œuvre pour réaliser une association entre des segments de voie ferrée modélisés et des objets de l'environnement adjacent, selon certains modes de réalisation de l'invention,
- Les Figures 7 et 8 montrent deux exemples d'association entre un segment de voie ferrée modélisé et un objet de l'environnement adjacent, selon des modes de réalisation l'invention, et
- La Figure 9 est un système de localisation selon des modes de réalisation de l'invention.

## Description détaillée

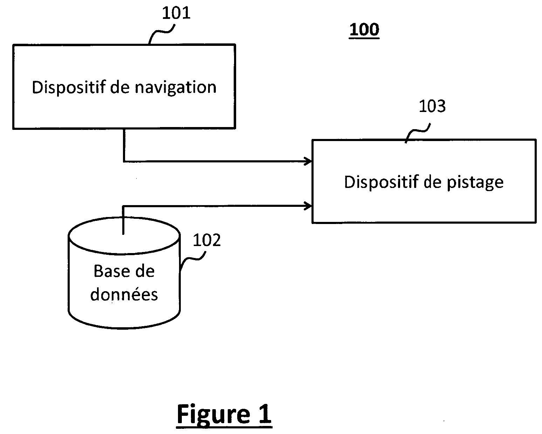

La figure 1 représente un système de localisation et de navigation autonome 100 dans lequel une base de données cartographique 102 intègre peut être utilisée selon certains modes de réalisation de l'invention.

Le système de localisation et de navigation autonome 100 peut être déployé dans un véhicule ferroviaire évoluant sur une voie ferrée d'un réseau ferroviaire afin de fournir d'une manière instantanée et précise la localisation du véhicule ferroviaire ainsi que des données de navigation utilisables pour une navigation en mode autonome. D'une manière plus générale, le système de localisation et de navigation autonome 100 peut être déployé sur n'importe quel type de véhicule mobile évoluant sur une trajectoire contrainte par voie dédiée, tel qu'un train.

Le système de localisation et de navigation autonome 100 peut comprendre en outre un dispositif de localisation 101 et un dispositif de pistage 103.

Le dispositif de localisation 101 peut comprendre un récepteur de signaux de navigation configuré pour recevoir des signaux de navigation émis par des systèmes de localisation tels que des systèmes de type GPS ou GNSS. Le dispositif de localisation 101 peut utiliser de tels signaux afin de déterminer des paramètres de localisation associés au véhicule mobile. Les paramètres de localisation peuvent comprendre des données de position représentant la position en trois dimensions du véhicule dans un référentiel géographique global lié à la Terre, et/ou l'orientation du véhicule et/ou la vitesse de déplacement du véhicule. Pour chaque position en trois dimensions déterminée, le dispositif de localisation 101 peut associer un ellipsoïde d'erreur et/ou un signal d'alarme qui peut être déclenché si une condition relative à la position déterminée par rapport à l'ellipsoïde est vérifiée. Dans un mode de réalisation, le signal d'alarme est déclenché si la position considérée du véhicule se situe dans l'ellipsoïde d'erreur. Le signal d'alarme peut être arrêté lorsque la position

EP 4 028 795 B1

considérée du véhicule passe en dehors de l'ellipsoïde d'erreur après un délai de temps prédéfini.

Le dispositif de localisation 101 peut en outre comprendre une centrale inertielle configurée pour fournir des paramètres de localisation moins précis que ceux déterminés à partir de signaux de navigation, sans utiliser aucune information extérieure. La centrale inertielle peut être utilisée en l'absence de signaux de navigation disponible afin de permettre une localisation en continue du véhicule mobile. Une telle situation peut se produire par exemple lorsqu'un véhicule mobile évolue dans un tunnel. La centrale inertielle peut également être utilisée en cas de dégradation de la qualité de signaux de navigation. Une telle dégradation peut avoir comme origine la propagation multi-trajet causée par des objets de l'environnement adjacent au véhicule mobile. Des objets de l'environnement adjacent pouvant induire une telle dégradation incluent par exemple des bâtiments, des végétations, des panneaux de signalisation, etc.

Dans un mode de réalisation de l'invention, le dispositif de localisation 101 peut comprendre en complément un module d'hybridation des paramètres de localisation fournis respectivement par le récepteur de signaux de navigation et par la centrale inertielle.

La base de données cartographique intègre 102 est configurée pour stocker un ensemble de données décrivant la topologie du réseau ferroviaire (dite ci-après « données de description de topologie ») comprenant au moins une voie ferrée, dans lequel un véhicule mobile peut se déplacer. Les données de la base de données cartographique intègre 102 peuvent en outre inclure de données décrivant le format d'un tel réseau (dite ci-après « données de description de format de réseau»). La topologie du réseau ferroviaire et le format de réseau constituent des éléments clé de la navigation autonome de véhicules mobiles. Tel qu'utilisé ici le terme 'navigation autonome' fait référence à une navigation dans un véhicule dépourvu de chauffeur actif.

La base de données cartographique intègre 102 peut en outre comprendre des données décrivant certains objets de l'environnement adjacent aux voies ferrées du réseau ferroviaire et susceptibles de perturber des signaux de navigation reçus par le véhicule mobile (dite ci-après « données de description d'objets environnementaux»).

Les données de description de la topographie peuvent comprendre des données d'identification de certains des éléments constitutifs du réseau ferroviaire associé à la base de données tels que des voies ferrées, des jonctions et/ou des points d'arrêt (encore appelés 'terminus'). Les données d'identification associées aux éléments constitutifs du réseau peuvent comprendre également des données d'interconnexions représentant les interconnexions entre les différents éléments constitutifs.

Chaque élément du réseau ferroviaire décrit par des données de la base de données 102 peut être associé à des données de localisation dans le référentiel géographique global lié à la Terre associé au dispositif de localisation 101.

Le format de réseau correspondant un réseau ferroviaire peut représenter un ensemble de trajets possibles sur le réseau ferroviaire, chaque trajet comprenant un ensemble de segments correspondant à une voie ferrée du réseau, pour un point de départ et un point d'arrivée donnée. Le format de réseau peut être déterminé à partir de caractéristiques de chaînage dans le réseau en identifiant, par exemple, pour chaque voie ferrée reliant un point de départ et un point d'arrivée les segments de voie ferrée qui la constituent et les jonctions rencontrées par un véhicule mobile se déplaçant sur le réseau ferroviaire. Une jonction est définie par rapport à un sens de déplacement et peut être vue comme un segment de longueur nulle qui possède une entrée et deux sorties.

Le dispositif de pistage 103 peut être configuré pour déterminer la localisation du véhicule mobile dans un référentiel ferroviaire en identifiant le segment de voie ferrée sur lequel le véhicule mobile se trouve. Le dispositif de pistage peut recevoir les paramètres de localisation fournis par le dispositif de localisation 101 puis interroger la base de données cartographique intègre 102 en utilisant une requête d'entrée comprenant au moins certains de ces paramètres pour identifier les segments de voie ferrée candidats sur lesquels le véhicule mobile peut être localisé. Le dispositif de pistage 103 peut utiliser des règles de navigation dans le réseau ferroviaire pour déterminer le segment de voie ferrée sur lequel le véhicule mobile se trouve. Le dispositif de pistage 103 peut en outre être configuré pour déterminer l'abscisse du véhicule mobile sur le segment de voie ferrée courant dans le référentiel considéré.

Les modes de réalisation de l'invention permettent avantageusement une génération semi-automatique de la base de données intègre 102.

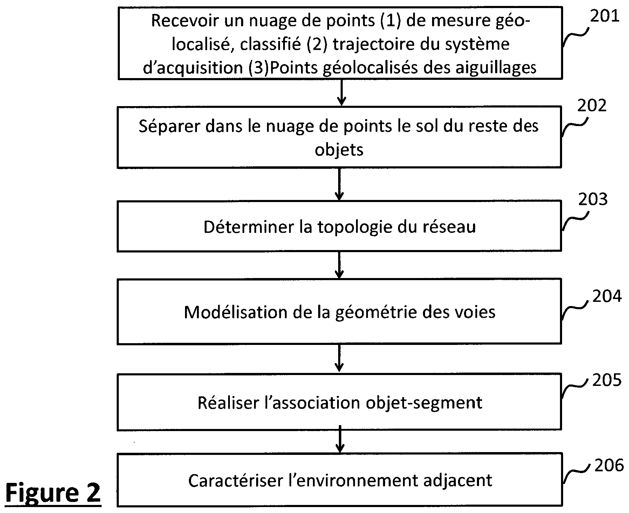

La figure 2 illustre le procédé de génération de base de données mis en œuvre pour générer la base de données cartographique 102 intègre, selon certains modes de réalisation de l'invention. A l'étape 201, un nuage de points de mesure géo-localisé et classifié décrivant de manière tridimensionnelle un réseau ferroviaire et son environnement adjacent est reçu. Chaque point de mesure peut être géo-localisé dans le sens où la localisation de ce point de mesure dans un référentiel de mesure donné est connu avec précision. Un tel référentiel de mesure peut être le référentiel de mesure terrestre. Les coordonnées des points de mesures peuvent être fournies dans un fichier de type trace GPS/GNSS. Le nuage de points de mesure géo-localisé peut être obtenu à partir de relevés topographiques préalablement réalisés au moyen d'une ou de plusieurs techniques de topographie. Des exemples de techniques de topographie incluent, sans y être limité, la topographie par système mobile, également désignée par le terme « Mobile Mapping System » ou MMS (signifiant Système de Cartographie Mobile), la topographie par satellite et la topographie classique mettant ou œuvre un dispositif de topographie transportable. Les systèmes MMS présentent l'avantage de permettre des mesures de très haute qualité en termes de résolution (inférieure à 10 centimètres) avec une qualité de géolocalisation accrue grâce à l'utilisation d'un système de géolocalisation hybride comprenant un dispositif de localisation GPS/GNSS associé à une centrale à l'inertielle. Des systèmes MMS peuvent utiliser plusieurs caméras optiques et des dispositifs de télédétection par laser pour construire une modélisation en trois dimensions de l'environnement analysé en mettant en œuvre des outils dédiés et des algorithmes de vision.

Chaque point de mesure géo-localisé peut en outre être classé en au moins deux groupes de nuages de points de mesure géo-localisés comprenant un groupe de nuages de points associé au sol et au réseau ferroviaire, et un groupe de nuage de points associé à l'environnement adjacent.

Une telle classification en deux groupes de nuages de points de mesure peut être effectuée en appliquant un ou plusieurs algorithmes de classification. De tels algorithmes de classification peuvent être exécutés sur un système informatique ou sur un service d'informatique en nuage. Une telle classification de points de mesure géo-localisés offre un gain de temps, de précision et de ressources informatiques en comparaison avec les approches classiques de classification qui sont effectuées manuellement par des opérateurs.

A l'étape 201, les coordonnées de certains éléments constitutifs du réseau ferroviaire, dans le même référentiel de mesure que le nuage de points de mesure géo-localisé, peuvent être en outre reçues. De tels éléments constitutifs peuvent comprendre les jonctions et les points d'arrêt.

A l'étape 201, une opération de sous-échantillonnage peut être appliquée sur le nuage de points de mesure géo-localisé et classifié reçu. Une telle opération de sous-échantillonnage permet de réduire la taille du nuage de points de mesure géo-localisé et classifié traité par le procédé de génération de bases de données. Le facteur de sous-échantillonnage associé à une telle opération de sous-échantillonnage peut être le même pour les trois dimensions du nuage de points de mesures géo-localisé et classifié. Alternativement, un facteur de sous-échantillonnage peut être associé à chaque dimension du nuage de points de mesure.

A l'étape 202, le nuage de points de mesure géo-localisé associé au sol et au réseau ferroviaire peut être séparé du nuage de points de mesure gé-localisé associé à l'environnement adjacent au réseau ferroviaire. Une telle séparation permet avantageusement un traitement en parallèle de deux nuages de points de mesures géo-localisés.

A l'étape 203, la topologie du réseau ferroviaire est déterminée à partir du nuage de points de mesure géo-localisé et classifié associé au sol et aux rails. L'étape de détermination de la topologie du réseau ferroviaire peut comprendre une identification des voies ferrées constituant le réseau ferroviaire, des jonctions et des points d'arrêts. Les voies ferrées peuvent être modélisées par des vecteurs géo-spatiales. Chacun des vecteurs géo-spatiales peut comprendre les coordonnées dans un référentiel de mesure de l'axe médian de la voie ferrée associée.

Les jonctions peuvent être identifiées en analysant les intersections entre les différentes voies ferrées identifiées telles que modélisées par les vecteurs géo-spatiales. Les points d'arrêts peuvent être identifiés en détectant les terminaisons des voies ferrées identifiées. Selon des modes de réalisation de l'invention, les localisations dans le référentiel de mesure des jonctions et des points d'arrêts peuvent être fournies par l'étape 201.

A l'étape 204, les voies ferrées, représentées par le vecteur géo-spatiale qui leur est associé, sont reçues afin de modéliser la géométrie des voies ferrées par des formes géométriques standard ou usuelles. La modélisation de la géométrie d'une voie ferrée peut comprendre une subdivision de la voie ferrée en plusieurs segments de voie ferrée. Une équation analytique peut être associée à chaque segment de voie ferrée pour décrire sa géométrie. Une association entre chaque segment de voie ferrée modélisé et les éléments du réseau ferroviaire (autres segments, jonction, points d'arrêt, etc.) auxquels il est connecté peut être déterminée, ce qui définit le format du réseau ferroviaire.

L'étape 205 est réalisée à partir du nuage de points de mesure géo-localisé associé à l'environnement adjacent et les segments de voie ferrée modélisés sont reçus. L'environnement adjacent au réseau ferroviaire peut être d'une largeur d'une centaines de mètre centré sur les voies ferrées du réseau ferroviaire. Un tel environnement peut comprendre des stations, des quais, des ponts, des tunnels, etc. Le nuage de points de mesure associé à l'environnement adjacent peut être transformé en plusieurs objets de l'environnement adjacent. Les objets de l'environnement adjacent peuvent être modélisés par des formes géométriques tridimensionnelles standard ou usuelles en déterminant, pour chaque objet de l'environnement adjacent modélisé, un ensemble de paramètres géométriques comprenant les dimensions de l'objet et les distances séparant l'objet des segments de voie ferrée modélisés. A l'étape 205, une association est déterminée entre chaque segment de voie ferrée modélisé et des objets de l'environnement adjacent modélisé susceptibles de perturber des signaux de navigation reçu par un véhicule mobile se déplaçant sur le segment de voie ferré considéré.

A l'étape 206, les segments de voie ferrée modélisés, les objets de l'environnement adjacent identifiés et les associations entre les segments et les objets telles que fournies par l'étape 205 sont utilisés pour caractériser les risques de propagation affectant les signaux de navigation reçus par un véhicule mobile se déplaçant sur les segments de voie ferrée. La caractérisation des risques de propagation peut être effectuée en plusieurs points de chaque segment de voie ferrée modélisée associée à un ou à plusieurs objets de l'environnement adjacent. La caractérisation des risques de propagation fournit des paramètres de risques de propagation tels que, par exemple et sans limitation, le type de risque de propagation et les dimensions du véhicule mobile associé au risque de propagation identifié.

Selon un mode de réalisation de l'invention, des éléments de la base de données cartographique peuvent être décrits dans un ou plusieurs fichiers de description ayant un format de représentation choisi tel que le format XML. De tels éléments de la base de données peuvent comprendre des segments de voie ferrée modélisé, des jonctions, des points d'arrêt, des objets de l'environnement adjacent et des associations entre les segments modélisés et les objets de l'environnement adjacent.

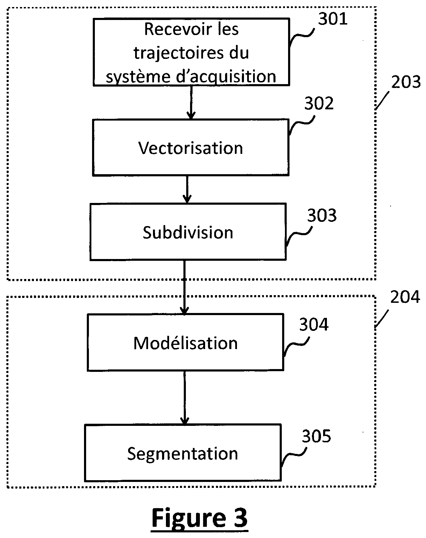

La figure 3 illustre les étapes mises en œuvre pour générer des segments de voie ferrée modélisés à partir d'un nuage de points de mesure géo-localisé et classifié associé au sol et aux voies ferrées selon un mode de réalisation de l'invention. De telles étapes correspondent aux étapes 203 et 204 de la figure 2. Le nuage de points peut être mesuré par un système de topographie mobile associé à une centrale inertielle. Les coordonnées des points de mesure peuvent être organisées dans des fichiers de géolocalisation ayant la structure d'une trace GPS/GNSS. Chaque fichier de géolocalisation peut contenir un ensemble de données décrivant de manière complète les coordonnées des points de mesure associés à une voie ferrée. Des coordonnées de voies ferrées secondaires peuvent être décrites séparément dans d'autres fichiers de géolocalisation.

A l'étape 301, des points de mesures géo-localisés associés au sol et aux voies ferrées et des positions des jonctions et des points d'arrêt sur les voies ferrées sont reçus.

A l'étape 302, les points de mesure géo-localisés reçus sont transformées en un ou plusieurs vecteurs géo-spatiaux. Chaque vecteur géo-spatial peut être associé à une voie ferrée et peut comprendre les coordonnées en trois dimensions d'un nombre prédéfini de points des rails de la voie ferrée associée. Alternativement, chaque vecteur géo-spatial peut comprendre les coordonnées en trois dimensions d'un nombre prédéfini de points de l'axe médian de la voie ferrée associée. L'espacement entre les points des rails ou de l'axe médian peut être constant. Le vecteur géo-spatial peut en outre comprendre des mesures de cap, de pente et de dévers associées à chacun des points des rails ou de l'axe médian de la voie ferrée. L'étape 302 peut être mise en œuvre en appliquant un algorithme de vision implémenté sur un ordinateur local ou sur un service d'informatique en nuage.

A l'étape 303, des vecteurs géo-spatiaux associés aux différentes voies ferrées sont subdivisés pour identifier d'autres éléments du réseau ferroviaire comprenant des jonctions et des points d'arrêt. L'identification de tels éléments peut s'effectuer à partir de leurs coordonnées fournis par l'étape 301. L'étape de subdivision 303 peut en outre comprendre la construction d'un graphe représentant la topologie du réseau ferroviaire. Le graphe peut comprendre un ensemble d'arêtes, de nœuds reliant les arêtes et des nœuds feuilles reliés à une seule arête. Les arêtes d'un tel graphe peuvent représenter des segments des voies ferrées associées à des vecteurs géo-spatiales et les nœuds peuvent représentés des jonctions ou des points d'arrêt (nœuds feuilles) du réseau ferroviaire. A l'étape de subdivision 303, les segments de voies ferrées connectés à chacun des nœuds (jonctions et points d'arrêt) du réseau ferroviaire, ainsi que les segments associés à chacune des voies ferrées peuvent par exemple être déterminés.

A l'étape 304, la géométrie des voies ferrées du réseau ferroviaire, représentés par les vecteurs géo-spatiaux, peut être modélisée en utilisant des équations analytiques. L'étape de modélisation 304 peut comprendre une subdivision de chaque vecteurs géo-spatial du réseau ferroviaire en plusieurs segments afin de faciliter la modélisation. Un écart-type mesurant l'erreur entre la courbe mesurée d'une voie ferrée et la courbe résultant des équations analytiques peut être déterminé. L'étape de modélisation 304 peut en outre être configurée pour que l'écart type associé à chacun des segments du réseau ferroviaire soit inférieure à un seuil d'erreur de modélisation prédéfini.

A l'étape 305, la segmentation du réseau ferroviaire est effectuée à partir des segments de voies ferrés modélisés ainsi que d'autres éléments du réseau ferroviaire. L'étape 305 peut, par exemple, comprendre une définition du sens d'aiguillage dans chacune des jonctions du réseau ferroviaire et d'un sens de déplacement de véhicules mobiles sur chacun des segments des voies ferrées modélisés. L'étape 305 peut en outre comprendre une sauvegarde des éléments du réseau ferroviaire ainsi que le format du réseau dans des fichiers de description ayant un format de description choisi (tel que le format XML par exemple).

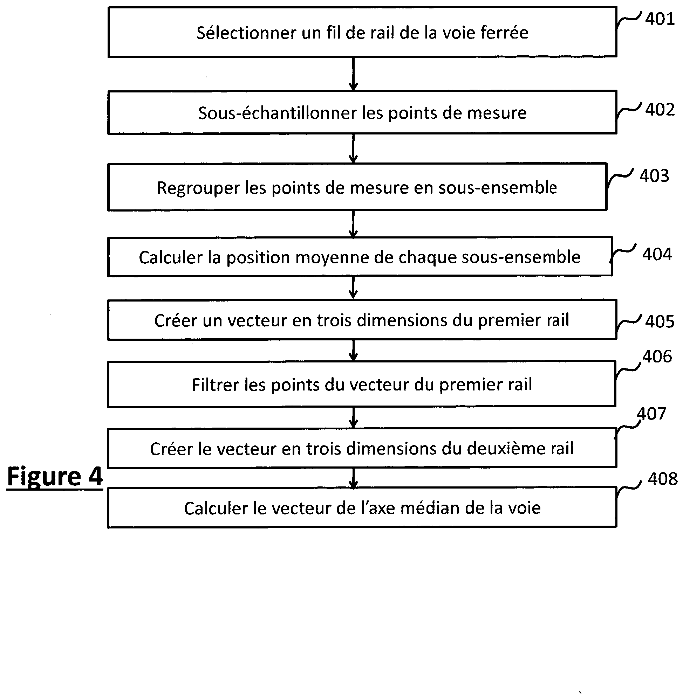

La figure 4 est un organigramme représentant les étapes mises en œuvre pour créer un vecteur géo-spatial à partir d'un nuage de points de mesure géo-localisé et classifié associé au sol et aux voies ferrées selon un mode de réalisation de l'invention. Dans un tel mode de réalisation, le vecteur géo-spatial représente l'axe médian d'une voie ferrée désignant un chemin de roulement pour un véhicule ferroviaire tel qu'un train comprenant deux fils de rails dont l'écartement est maintenu constant par une fixation sur des traverses. Selon d'autres modes de réalisation de l'invention, le vecteur géo-spatial peut représenter un ou plusieurs fils de rails de la voie ferrée.

A l'étape 401, l'un des fils de rail de chaque voie ferrée est sélectionné en analysant les points de mesure associés et leurs coordonnées telles que fournies par le fichier de géo-location du nuage de points de mesure. Pour une voie ferrée comprenant deux fils de rails, le rail de droite défini par rapport au sens de déplacement du véhicule mobile peut par exemple être sélectionné. La suite de la description sera faite en référence à un tel exemple de sélection de fil de rails, à titre d'exemple non limitatif.

Les points de mesure associés au fil de rail sélectionné sont ensuite sous-échantillonnés à l'étape 402. Le facteur de sous-échantillonnage peut être de l'ordre d'une dizaine de points. Un tel ordre de grandeur du facteur de sous-échantillonnage constitue un compromis entre la précision de mesure et la complexité du calcul.

A l'étape 403, les points de mesures sous-échantillonnés sont regroupés en des sous-groupes de points de mesures sous-échantillonnés de sorte que deux sous-groupes de points de mesures sous-échantillonnés successifs partagent au moins un point de mesure. Un tel chevauchement entre les sous-groupes de points de mesure garantit la continuité des mesures qui seront extraites.

A l'étape 404, une moyenne mobile est appliquée sur les sous-groupes de points de mesures sous-échantillonnés afin de calculer de chacun de sous-groupes une position moyenne en trois dimensions. Une telle position moyenne peut être définie dans le même référentiel de mesure que celui associé au nuage de points de mesure géo-localisé.

A l'étape 405, un vecteur géo-spatial représentant la voie de droite de la voie ferrée est créé en regroupant les positions moyennes en trois dimensions calculés et en respectant l'ordre selon lequel les positions sont obtenues.

A l'étape 406, le vecteur géo-spatial ainsi obtenu est filtré de sorte à éliminer les positions issues de points de mesure susceptible d'être impactés par des bruits d'une classification automatisées.

A l'étape 407, les points de mesures associés au fil de rail de gauche de la voie ferrée sont analysés de manière similaire que pour le fil de rail de droite de la même voie ferrée, pour déterminer un deuxième vecteur géo-spatial représentant la voie de gauche.

A l'étape 408, le vecteur géo-spatial représentant l'axe médian de la voie ferrée est déterminé à partir des vecteurs géo-spatiaux représentant les fils de rail de gauche et de droite associés. Les coordonnées de l'axe médian de la voie ferrée peuvent être calculées en effectuant la moyenne entre les points de vecteurs de rails de droite et de gauche.

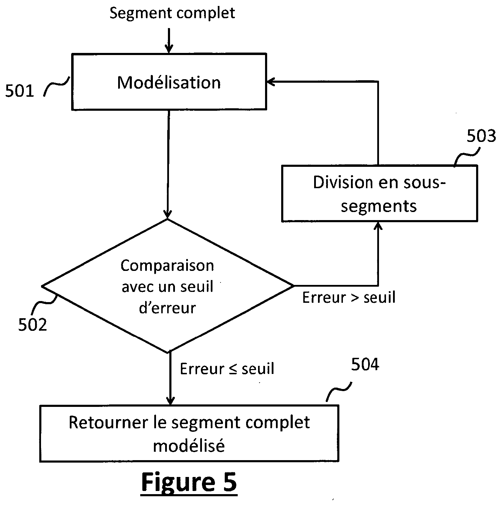

La figure 5 est un organigramme représentant le procédé de modélisation mis en œuvre pour modéliser un vecteur géo-spatial représentant une voie ferrée en utilisant une ou plusieurs équations analytiques. Le procédé de modélisation peut comprendre une ou plusieurs itérations d'un ensemble d'étapes de modélisation et peut recevoir un seuil d'erreur de modélisation défini par unité de longueur. Les équations analytiques qui peuvent être utilisées pour modéliser la géométrie de l'axe centrale d'une voie ferrée peuvent correspondre à un ensemble de formes géométriques de base telles qu'une droite, un arc de cercle et un clothoïde. En pratique, la forme d'une voie ferrée peut être rapprochée d'une des formes géométriques de base même si une correspondance exacte n'est pas obtenue. Une erreur de modélisation pouvant être de type quadrature moyenne peut être associée à cette correspondance.

A l'étape 501 du procédé de modélisation, un vecteur géo-spatial représentant une voie ferrée est reçu afin d'être modélisé avec l'une des formes géométriques de base identifiées. La forme géométrique de base retenue pour modéliser un vecteur géo-spatial est celle associé à une erreur de modélisation minimale. L'étape 501 peut en outre être configurée pour fournir pour chaque vecteur géo-spatial modélisé des paramètres comprenant la forme géométrique retenue, les paramètres de l'équation analytique permettant de rapprocher la géométrie du vecteur géo-spatial à la forme géométrique retenue et l'erreur de modélisation associé à un tel rapprochement.

A l'étape 502 du procédé de modélisation, l'erreur de modélisation telle que fournie par l'étape de modélisation 501 est comparée à un seuil de modélisation. Un tel seuil de modélisation peut être déterminé en multipliant le seuil de modélisation par unité de longueur et la longueur de la voie ferrée représentée par le vecteur géo-spatial. Les itérations du procédé de modélisation peuvent être arrêtées si le seuil de modélisation est supérieur à l'erreur de modélisation.

A l'étape 503, le vecteur géo-spatial modélisé présentant une erreur de modélisation supérieure au seuil de modélisation est divisé en deux segments pouvant avoir la même longueur. Chacun des deux segments peut être modélisé d'une manière similaire que le vecteur géo-spatial complet selon une approche itérative consistant à diviser en deux sous-segments chaque segment présentant une erreur de modélisation supérieure au seuil d'erreur de modélisation. Le procédé de modélisation d'un vecteur géo-spatial représentant une voie ferrée fournit plusieurs segments dont chacun est modélisé par une équation analytique respectant un seuil d'erreur de modélisation.

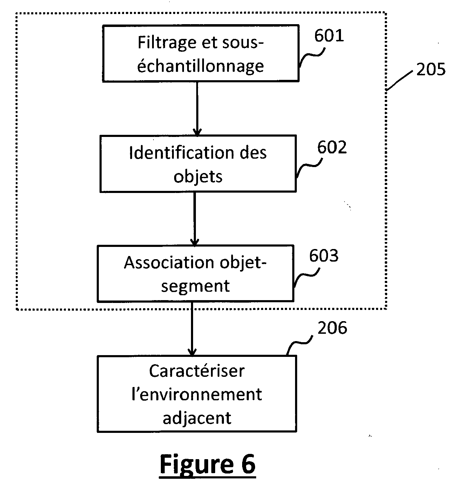

La figure 6 illustre les étapes mises en œuvre pour identifier et associer aux segments modélisés des objets adjacents au réseau ferroviaire susceptibles de perturber des signaux de navigation reçus par un véhicule mobile se déplaçant sur les segments modélisés de voie ferrée du réseau ferroviaire, selon un mode de réalisation de l'invention.

A l'étape 601, le nuage de points de mesure géo-localisés et classifiés associé à l'environnement adjacent au réseau ferroviaire est filtré selon des critères de filtrage prédéfinis. Une telle opération de filtrage permet, par exemple, d'éliminer des points de mesure correspondant à des objets adjacents de faible hauteur par rapport à la hauteur du véhicule mobile recevant des signaux de navigation. Le risque que des objets adjacents de faible hauteur perturbent des signaux de navigation peut être négligé. L'étape 601 peut en outre comprendre une opération de sous-échantillonnage appliquée aux points de mesures associés à des objets adjacents dont la hauteur est de même ordre de grandeur que la hauteur du véhicule mobile. Le facteur de sous-échantillonnage peut être choisi de manière à permettre l'identification des objets adjacents tout en réduisant la complexité du traitement.

A l'étape 602, les points de mesures filtrés et sous-échantillonnés sont transformés en des objets adjacents, les objets adjacents étant associés à des paramètres d'objet tels que la localisation géographique de l'objet, des dimensions (par exemple, la longueur, la largeur et/ou la hauteur), la distance séparant l'objet de la voie ferrée la plus proche, et/ou l'orientation relative de l'objet par rapport à la trajectoire. Les objets adjacents obtenus peuvent en outre être synthétisés en une figure géométrique standard telle qu'un parallélépipède, un cylindre, une pyramide, etc.

A l'étape 603, les objets adjacents obtenus sont associés à des segments des voies ferrées du réseau ferroviaire. Un objet peut être associé avec un segment de voie ferrée si des signaux de navigation reçus par un véhicule mobile se déplaçant sur le segment de la voie ferrée sont susceptibles d'être perturbés par l'objet considéré. Un objet adjacent peut donc être associé à plus qu'un segment de voie ferrée. Des segments de voie ferrée peuvent ne pas être associés à aucun objet adjacent.

A l'étape 704, le phénomène physique principal susceptible de perturber des signaux de navigation relativement à chaque association entre un segment de voie ferrée et un objet adjacent est déterminé. Un tel phénomène physique peut être par exemple la propagation multi-trajets, la propagation sans visibilité directe entre l'émetteur et le récepteur des signaux de navigation, la diffraction, etc. Le phénomène physique responsable de la perturbation de signaux de navigation peut en outre être caractérisé en spécifiant les paramètres géométriques relatifs à l'association entre le segment modélisé et l'objet adjacent et à au véhicule ferroviaire recevant les signaux de navigation. De tels paramètres géométriques peuvent inclure la distance qui sépare les deux éléments de l'association, les dimensions de l'objet adjacent et les dimensions du véhicule ferroviaire.

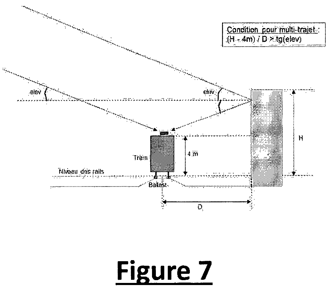

La figure 7 montre un exemple d'association entre un segment de voie ferrée et un objet adjacent dans laquelle la propagation multi-trajet est le principal phénomène physique responsable de la perturbation de signaux de navigation. L'objet est synthétisé en une forme géométrique de type parallélépipède, de hauteur 'H' et distant de l'axe central du sous-segment de la voie ferrée d'une distance 'D'. Pour un véhicule mobile de hauteur 'M', le phénomène de propagation multi-trajet peut être quantifié en utilisant une équation mathématique liant les paramètres 'M' et 'D' à l'angle d'élévation 'alpha' entre le niveau des rails et la direction dans laquelle le signal de navigation est reçu. Une telle équation peut s'écrire sous la forme suivante :

$$(H-M)/D > \text{tangente (alpha)} \qquad\qquad (1)$$

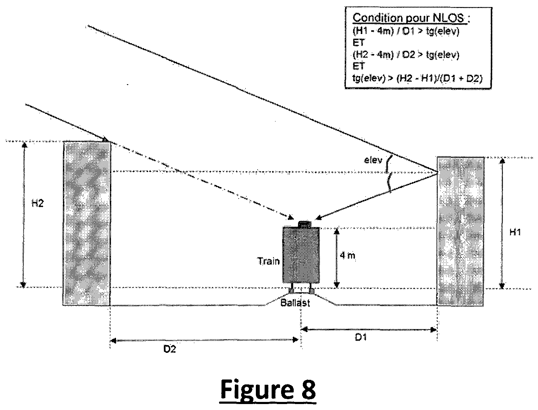

La figure 8 montre un deuxième exemple d'association dans laquelle un segment de voie ferrée est associé à deux objets adjacents. Dans une telle association, la propagation sans visibilité directe entre l'émetteur et le récepteur de signaux de navigation est le principal phénomène physique responsable de la perturbation de signaux de navigation. Les deux objets mis en œuvre dans une telle association sont synthétisés en une forme géométrique de type parallélépipède. Les deux objets adjacents sont de hauteurs H1 et H2 et sont distants de l'axe médian du segment de la voie ferrée de distances respectives D1 et D2. Pour un véhicule mobile de hauteur M, le phénomène de propagation sans visibilité directe entre l'émetteur et le récepteur de signaux de navigation peut se manifester lorsque l'angle d'élévation tel que défini ci-dessus satisfait les relations suivantes :

$$(H1-4M)/D1 > tg(alpha) \text{ ET } (H2-4M)/D2 > tg(alpha) \text{ ET } tg(alpha) > (H2-H1) / (D1+D2) \quad (2)$$

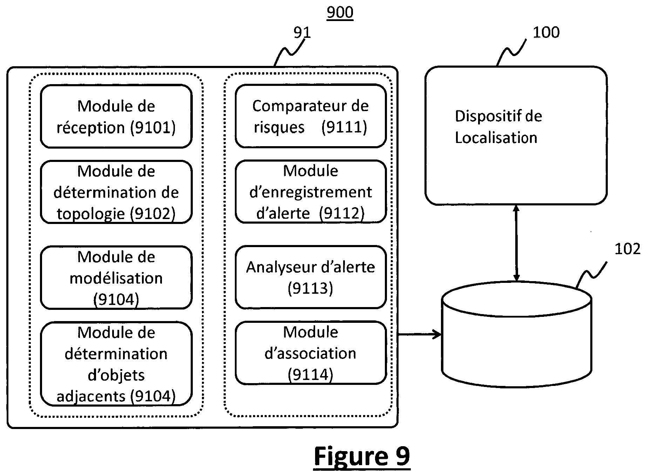

La figure 9 est un schéma représentant un système de localisation autonome 100 d'un véhicule mobile se déplaçant sur une voie ferrée d'un réseau ferroviaire mettant en œuvre le procédé de localisation, selon un mode de réalisation de l'invention.

Le système de localisation autonome 100 peut comprendre un dispositif de localisation 101 configuré pour :

- Déterminer des paramètres de localisation associés au véhicule mobile dans un référentiel géographique,

- Déterminer un ou plusieurs segments de voie ferrée candidats en interrogeant une base de données cartographique à partir d'au moins certains paramètres de localisation, et

- Localiser le véhicule mobile à partir des segments de voie ferrée candidats retournés par la base de données cartographique 102.

Le système de localisation 100 peut inclure en outre une unité de génération de base de données cartographiques 91 pour générer des informations ou alertes sur des possibles modifications de la base de données 102 (évolution de l'environnement).

L'unité de génération de base de données cartographiques 91 peut comprendre :

- Un module de réception 9100 configuré pour recevoir un nuage de points de mesure classifié et géo-localisé dans un système de coordonnées, ledit nuage de points de mesure étant associé audit réseau ferroviaire et audit environnement adjacent,

- Un module de détermination de topologie 9102 configuré pour déterminer la topologie dudit réseau ferroviaire à partir de points de mesure géo-localisés et classifiés associés audit réseau ferroviaire et d'une pluralité d'éléments additionnels dudit réseau ferroviaire,

- Un module de modélisation 9104 configuré pour modéliser la géométrie des voies ferrées dudit réseau ferroviaire en une pluralité de segments de voie ferrée modélisées,

- Un module de détermination d'objets adjacents 9106 configuré pour déterminer à partir de points de mesure géo-localisés et classifiés associés audit environnement adjacent un ou plusieurs objets adjacents, chacun desdits objets adjacents étant associé à un ou à plusieurs segments de voie ferrée modélisées, et

- Un module d'identification 9108 configuré pour identifier pour chaque association entre un objet adjacent et un ou plusieurs segments de voie ferrée modélisés des informations représentant les perturbations subies par lesdits signaux de navigation.

Dans un mode de réalisation, l'unité de génération de base de données cartographique 91 peut en outre comprendre :

- Un comparateur 9111 apte à déterminer des changements du niveau de risque 704 associés au réseau ferroviaire et à l'environnement adjacent. Un tel comparateur 9111 peut notamment signaler des éléments du nuage de points géo-localisés associés à l'environnement adjacent en une pluralité d'objets adjacents susceptibles de perturber les signaux de navigation ;

- Un module d'enregistrement d'alerte 9112 apte à détecter le changement de niveau de risque (704) dans la base de données ;

- Un module d'analyse d'alerte 9113 apte à qualifier l'alerte par redondance de mesures 9112 ;

- Un module d'association 9114 apte à associer les alertes confirmées 9113 à au moins l'un des segments modélisés 102.

Les modes de réalisation de l'invention permettent ainsi de reconstruire la géométrie et la topologie d'un réseau ferroviaire à partir d'un nuage de points de mesure géo-localisé et classifié. Ils permettent en outre de qualifier les risques liés à la nature 3D de l'environnement adjacent au réseau ferroviaire, en transformant les mesures 3D d'un nuage de point classifié et sa trace (GPS/GNSS) vers des vecteurs géo-spatiaux 3D pour une production semi-automatisée à grande échelle, sans nécessiter d'étape de dessin ou de guidage manuelle avec un logiciel CAO.

L'homme du métier comprendra que le système ou des sous-système selon les modes de réalisation de l'invention peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier et qui sont couvertes par la portée des revendications annexées.

## Revendications

1. Procédé de localisation dans un référentiel ferroviaire d'un véhicule mobile se déplaçant sur des voies ferrées d'un réseau ferroviaire comprenant les étapes consistant à :

- déterminer des paramètres de localisation associés à la position du véhicule mobile dans un référentiel géographique à partir d'une pluralité de signaux de navigation d'un système de type GNSS ou GPS, reçus par ledit véhicule mobile,
- déterminer un ou plusieurs segments de voie ferrée sur lesquels le véhicule mobile est susceptible d'être localisé en interrogeant une base de données cartographique à partir d'au moins un des paramètres de localisation,

- localiser le véhicule mobile à partir des segments de voie ferrée fournis par la base de données cartographique et au moins l'un des paramètres de localisation,

ladite base de données cartographique comprenant des données représentant une description vectorielle d'au moins une voie ferrée du réseau ferroviaire et des données représentant une description d'un ou de plusieurs objets de l'environnement adjacent aux voies ferrées du réseau ferroviaire susceptibles de perturber les signaux de navigation reçus par ledit véhicule mobile, le procédé comprenant une étape de génération de ladite base de données cartographiques comprenant les étapes consistant à :

- Recevoir (201) un nuage de points de mesure classifié et géo-localisé dans un système de coordonnées, ledit nuage de points de mesure étant associé audit réseau ferroviaire et audit environnement adjacent,
- déterminer (203) la topologie dudit réseau ferroviaire à partir de points de mesure géo-localisés et classifiés associés audit réseau ferroviaire et d'une pluralité d'éléments additionnels dudit réseau ferroviaire,
- modéliser (204) la géométrie des voies ferrées dudit réseau ferroviaire en une pluralité de segments de voie ferrée modélisées, où l'étape de modélisation de la géométrie de l'axe médian d'une voie ferrée représentée par un vecteur géo-spatial comprend une ou plusieurs itérations des étapes suivantes :

  i. Déterminer un modèle analytique courant de la géométrie de l'axe médian de la voie ferrée représentée par un vecteur géo-spatial en utilisant au moins une équation analytique,
  ii. Mesurer l'écart-type entre l'axe médian de la voie ferrée et la courbe associée retournée par le modèle analytique,
  iii. Diviser le vecteur géo-spatiale en deux éléments, si l'écart-type mesuré est supérieur à un seuil d'erreur prédéfini,

les étapes i. à iii. étant itérées tant qu'un écart-type entre le modèle analytique et le vecteur géo-spatial est supérieur au seuil d'erreur prédéfini ;
- déterminer (205) à partir de points de mesure géo-localisés et classifiés associés audit environnement adjacent un ou plusieurs objets adjacents, chacun desdits objets adjacents étant associé à un ou à plusieurs segments de voie ferrée modélisées,

  - identifier (206) pour chaque association entre un objet adjacent et un ou plusieurs segments de voie ferrée modélisés des informations représentant les perturbations subies par lesdits signaux de navigation.

2. Procédé selon la revendication 1, **caractérisé en ce qu'**il comprend en outre une étape consistant à sauvegarder les éléments comprenant les segments de voie ferrée modélisés, les éléments additionnels du réseau ferroviaire, et/ou les objets adjacents dans des fichiers ayant un format de représentation donné.

3. Procédé selon la revendication 1, **caractérisé en ce que** lesdits éléments additionnels du réseau ferroviaire comprennent des jonctions et des points d'arrêt.

4. Procédé selon l'une des revendications précédentes, **caractérisé en ce que** le nuage de points de mesure géo-localisé et classifié est reçu d'au moins un système de topographie mobile associé à un système de géolocalisation hybride comprenant un dispositif de localisation associé à une centrale inertielle.

5. Procédé selon l'une des revendications précédentes, **caractérisé en ce que** lesdits paramètres de localisation comprennent une position en trois dimensions, une vitesse de déplacement et/ou un paramètre d'orientation.

6. Procédé selon l'une des revendications précédentes, **caractérisé en ce que** ladite étape de détermination de la topologie du réseau ferroviaire comprend les étapes consistant à :

  - Transformer des éléments dudit nuages de points géo-localisé associés audit réseau ferroviaire en une pluralité de vecteurs géo-spatiaux, chacun des vecteurs géo-spatiaux correspondant à une voie ferrée,
  - Subdiviser ledit réseau ferroviaire, en définissant pour chaque vecteur géo-spatiale, une pluralité d'éléments comprenant des jonctions et/ou des points d'arrêt.

7. Procédé selon la revendication 6, **caractérisé en ce que** chaque voie ferrée comprend deux fils de rails, et **en ce que** l'étape de vectorisation dudit nuage de points de mesure géo-localisé et classifié associé au sol et aux voies ferrées en une pluralité de vecteurs géo-spatiales comprend les étapes consistant à :

- Identifier les points dudit nuage de points géo-localisés associés à un fil de rail choisie de la voie ferrée,
- Sous-échantillonner lesdits points identifiés en utilisant un facteur de sous-échantillonnage préfini,
- Regrouper les points sous-échantillonnés en une pluralité de sous-ensembles de points, deux sous-ensembles de points successifs partageant au moins un point de mesure,
- Calculer la position moyenne en trois dimensions de chaque sous-ensemble de points en utilisant une moyenne mobile,
- Créer un vecteur associé au fil de rails choisi comprenant les positions moyennes en trois dimensions calculées,
- Eliminer les composantes du vecteur créé susceptibles d'être impactées par des bruits d'une classification automatisée, ce qui fournit un vecteur géo-spatial,
- Déterminer le(s) vecteur(s) associés à l'autre fil de rails de la voie ferrée à partir du vecteur géo-spatial déterminé pour le rail sélectionné, et
- Calculer le vecteur géo-spatial associé à l'axe médian de la voie ferrée.

8. Procédé selon la revendication 7, **caractérisé en ce que** chaque vecteur géo-spatial comprend en outre des mesures d'orientation, de pente et de dévers extraites de chaque sous-ensemble de points repérés.

9. Procédé selon la revendication 6, **caractérisé en ce que** l'étape de subdivision utilise un graphe comprenant un ensemble d'arêtes, et des nœuds reliant les arêtes, les arêtes représentant des voies ferrées associées à des vecteurs géo-spatiales et les nœuds représentant des jonctions ou des points d'arrêt du réseau ferroviaire.

10. Procédé selon l'une des revendications précédentes, **caractérisé en ce qu'**il comprend en outre la détermination d'un format de réseau correspondant audit réseau ferroviaire en associant chaque segment de voie ferrée modélisé à un ou plusieurs éléments du réseau ferroviaire.

11. Procédé selon l'une des revendications précédentes, **caractérisé en ce que** l'étape de définition d'objets adjacents et d'association entre un objet adjacent et un ou plusieurs segments modélisés comprend les étapes consistant à :

   - Sous-échantillonner les points de mesure associés à l'environnement adjacent par un facteur de sous-échantillonnage prédéfini,
   - Transformer les points de mesure sous-échantillonnés en un ou plusieurs objets adjacents,
   - Associer les objets adjacents avec les segments de voie ferrée modélisés.

12. Procédé selon l'une des revendications précédentes, **caractérisé en ce que** des propriétés de propagation de signaux de navigation sont assignées à chaque association entre un objet adjacent et un ou plusieurs segments modélisés en fonction d'une pluralité de paramètres comprenant la hauteur de l'objet adjacent et de la distance séparant l'objet adjacent de l'axe médian du segment modélisé.

13. Système de localisation dans un référentiel ferroviaire d'un véhicule mobile se déplaçant sur des voies ferrées d'un réseau ferroviaire comprenant un dispositif de localisation (101) configuré pour :

   - déterminer des paramètres de localisation associés à la position du véhicule mobile dans un référentiel géographique à partir d'une pluralité de signaux de navigation d'un système de type GNSS ou GPS, reçus par ledit véhicule mobile,
   - déterminer un ou plusieurs segments de voie ferrée sur lesquels le véhicule mobile est susceptible d'être localisé en interrogeant une base de données cartographique à partir d'au moins un des paramètres de localisation,
   - localiser le véhicule mobile à partir des segments de voie ferrée fournis par la base de données cartographique et au moins l'un des paramètres de localisation,

   **caractérisé en ce que** ladite base de données cartographique comprenant des données représentant une description vectorielle d'au moins une voie ferrée du réseau ferroviaire et des données représentant une description d'un ou de plusieurs objets de l'environnement adjacent aux voies ferrées du réseau ferroviaire susceptibles de perturber lesdits signaux de navigation reçus par ledit véhicule mobile, et **en ce que** le système de localisation (100) inclut en outre une unité de génération de base de données cartographiques (91) comprenant :

   - Un module de réception configuré pour recevoir un nuage de points de mesure classifié et géo-localisé dans un système de coordonnées, ledit nuage de points de mesure étant associé audit réseau ferroviaire et audit environnement adjacent,

- Un module de détermination de topologie configuré pour déterminer la topologie dudit réseau ferroviaire à partir de points de mesure géo-localisés et classifiés associés audit réseau ferroviaire et d'une pluralité d'éléments additionnels dudit réseau ferroviaire,

- Un module de modélisation configuré pour modéliser la géométrie des voies ferrées dudit réseau ferroviaire en une pluralité de segments de voie ferrée modélisées, où la modélisation de la géométrie de l'axe médian d'une voie ferrée représentée par un vecteur géo-spatial comprenant :

i. une détermination d'un modèle analytique courant de la géométrie de l'axe médian de la voie ferrée représentée par un vecteur géo-spatial en utilisant au moins une équation analytique,

ii. une mesure de l'écart-type entre l'axe médian de la voie ferrée et la courbe associée retournée par le modèle analytique,

iii. une division du vecteur géo-spatiale en deux éléments, si l'écart-type mesuré est supérieur à un seuil d'erreur prédéfini,

une réitération de la détermination (i), de la mesure (ii) et de la division (iii) tant qu'un écart-type entre le modèle analytique et le vecteur géo-spatial est supérieur au seuil d'erreur prédéfini,

- Un module de détermination d'objets adjacents configuré pour déterminer à partir de points de mesure géo-localisés et classifiés associés audit environnement adjacent un ou plusieurs objets adjacents, chacun desdits objets adjacents étant associé à un ou à plusieurs segments de voie ferrée modélisées,

- Un module d'identification configuré pour identifier pour chaque association entre un objet adjacent et un ou plusieurs segments de voie ferrée modélisés des informations représentant les perturbations subies par lesdits signaux de navigation.

**Patentansprüche**

1. Lokalisierungsverfahren in einem Eisenbahnbezugssystem eines mobilen Fahrzeugs, das sich auf Schienenwegen eines Eisenbahnnetzes bewegt, umfassend die Schritte bestehend aus:

- Bestimmen von Lokalisierungsparametern, die der Position des mobilen Fahrzeugs in einem geographischen Bezugssystem zugeordnet sind, anhand einer Vielzahl von Navigationssignalen eines GNSS- oder GPS-Systems, die von dem mobilen Fahrzeug empfangen werden,

- Bestimmen von einem oder mehreren Schienenwegsegmenten, auf denen das mobile Fahrzeug wahrscheinlich lokalisiert wird, durch Abfragen einer kartographischen Datenbank anhand mindestens eines der Lokalisierungsparameter,

- Lokalisieren des mobilen Fahrzeugs anhand der Schienenwegsegmente, die von der kartographischen Datenbank und mindestens einem der Lokalisierungsparameter bereitgestellt werden,

wobei die kartographische Datenbank Daten, die eine Vektorbeschreibung von mindestens einem Schienenweg des Eisenbahnnetzes darstellen, und Daten, die eine Beschreibung von einem oder mehreren Objekten der Umgebung angrenzend an die Schienenwege des Eisenbahnnetzes darstellen, die wahrscheinlich die von dem mobilen Fahrzeug empfangenen Navigationssignale stören, umfasst, wobei das Verfahren einen Schritt zum Erzeugen der kartographischen Datenbank umfasst, umfassend die Schritte bestehend aus:

- Empfangen (201) einer Messpunktwolke, die in einem Koordinatensystem klassifiziert und geolokalisiert ist, wobei die Messpunktwolke dem Eisenbahnnetz und der angrenzenden Umgebung zugeordnet ist,

- Bestimmen (203) der Topologie des Eisenbahnnetzes anhand von geolokalisierten und klassifizierten Messpunkten, die dem Eisenbahnnetz zugeordnet sind, und einer Vielzahl von zusätzlichen Elementen des Eisenbahnnetzes,

- Modellieren (204) der Geometrie der Schienenwege des Eisenbahnnetzes in eine Vielzahl von modellierten Schienenwegsegmenten, wobei der Schritt zum Modellieren der Geometrie der Mittelachse eines Schienenwegs, der durch einen georäumlichen Vektor dargestellt ist, eine oder mehrere Iterationen der folgenden Schritte umfasst:

i. Bestimmen eines aktuellen analytischen Modells der Geometrie der Mittelachse des Schienenwegs, der durch einen georäumlichen Vektor dargestellt ist, unter Verwendung mindestens einer analytischen Gleichung,

ii. Messen der Standardabweichung zwischen der Mittelachse des Schienenwegs und der zugeordneten Kurve, die von dem analytischen Modell zurückgesendet wird,

iii. Teilen des georäumlichen Vektors in zwei Elemente, wenn die gemessene Standardabweichung über einem vordefinierten Fehlerschwellenwert liegt,

wobei die Schritte i. bis iii iteriert werden, solange eine Standardabweichung zwischen dem analytischen Modell und dem georäumlichen Vektor über dem vordefinierten Fehlerschwellenwert liegt;

- Bestimmen (205), anhand von geolokalisierten und klassifizierten Messpunkten, die der angrenzenden Umgebung zugeordnet sind, von einem oder mehreren angrenzenden Objekten, wobei jedes der angrenzenden Objekte einem oder mehreren modellierten Schienenwegsegmenten zugeordnet ist,
- Identifizieren (206), für jede Zuordnung zwischen einem angrenzenden Objekt und einem oder mehreren modellierten Schienenwegsegmenten, von Informationen, die die Störungen darstellen, von denen die Navigationssignale betroffen sind.

2. Verfahren nach Anspruch 1, **dadurch gekennzeichnet, dass** es ferner einen Schritt umfasst, der darin besteht, die Elemente, umfassend die modellierten Schienenwegsegmente, die zusätzlichen Elemente des Eisenbahnnetzes und/oder die angrenzenden Objekte, in Dateien zu sichern, die ein gegebenes Darstellungsformat aufweisen.

3. Verfahren nach Anspruch 1, **dadurch gekennzeichnet, dass** die zusätzlichen Elemente des Eisenbahnnetzes Abzweigstellen und Haltepunkte umfassen.

4. Verfahren nach einem der vorhergehenden Ansprüche, **dadurch gekennzeichnet, dass** die geolokalisierte und klassifizierte Messpunktwolke von mindestens einem mobilen Topographiesystem empfangen wird, das einem hybriden Geolokalisierungssystem zugeordnet ist, das eine einer inertialen Messeinheit zugeordnete Lokalisierungsvorrichtung umfasst.

5. Verfahren nach einem der vorhergehenden Ansprüche, **dadurch gekennzeichnet, dass** die Lokalisierungsparameter eine Position in drei Dimensionen, eine Bewegungsgeschwindigkeit und/oder einen Orientierungsparameter umfassen.

6. Verfahren nach einem der vorhergehenden Ansprüche, **dadurch gekennzeichnet, dass** der Schritt zum Bestimmen der Topologie des Eisenbahnnetzes die Schritte umfasst, bestehend aus:

- Umwandeln von Elementen der dem Eisenbahnnetz zugeordneten geolokalisierten Punktwolken in eine Vielzahl von georäumlichen Vektoren, wobei jeder der georäumlichen Vektoren einem Schienenweg entspricht,
- Unterteilen des Eisenbahnnetzes durch Definieren, für jeden georäumlichen Vektor, einer Vielzahl von Elementen, umfassend Abzweigstellen und/oder Haltepunkte.

7. Verfahren nach Anspruch 6, **dadurch gekennzeichnet, dass** jeder Schienenweg zwei Schienenstränge umfasst und dass der Schritt zum Vektorisieren der geolokalisierten und klassifizierten Messpunktwolke, die dem Boden und den Schienenwegen zugeordnet ist, in eine Vielzahl von georäumlichen Vektoren die Schritte umfasst, bestehend aus:

- Identifizieren der Punkte der geolokalisierten Punktwolke, die einem ausgewählten Schienenstrang des Schienenwegs zugeordnet sind,
- Unterabtasten der identifizierten Punkte unter Verwendung eines vordefinierten Unterabtastvektors,
- Umgruppieren der unterabgetasteten Punkte in eine Vielzahl von Teilsätzen von Punkten, wobei sich zwei aufeinander folgende Teilsätze von Punkten mindestens einen Messpunkt teilen,
- Berechnen der mittleren Position in drei Dimensionen von jedem Teilsatz von Punkten unter Verwendung eines gleitenden Durchschnitts,
- Erstellen eines dem ausgewählten Schienenstrang zugeordneten Vektors, umfassend die berechneten mittleren Positionen in drei Dimensionen,
- Eliminieren der Komponenten des erstellten Vektors, die wahrscheinlich vom Rauschen einer automatisierten Klassifizierung betroffen sein werden, was einen georäumlichen Vektor bereitstellt,
- Bestimmen des Vektors (der Vektoren), der (die) dem anderen Schienenstrang des Schienenwegs zugeordnet ist (sind), anhand des georäumlichen Vektors, der für die ausgewählte Schiene bestimmt ist, und
- Berechnen des georäumlichen Vektors, der der Mittelachse des Schienenwegs zugeordnet ist.

8. Verfahren nach Anspruch 7, **dadurch gekennzeichnet, dass** jeder georäumliche Vektor ferner Orientierungs-, Neigungs- und Überhöhungsmessungen umfasst, die aus jedem Teilsatz von Bezugspunkten extrahiert werden.

9. Verfahren nach Anspruch 6, **dadurch gekennzeichnet, dass** der Schritt zum Unterteilen einen Graphen verwendet, der einen Satz von Kanten und die Kanten verbindende Knoten umfasst, wobei die Kanten Schienenwege darstellen, die georäumlichen Vektoren zugeordnet sind, und die Knoten Abzweigstellen oder Haltepunkte des Eisenbahnnetzes darstellen.

10. Verfahren nach einem der vorhergehenden Ansprüche, **dadurch gekennzeichnet, dass** es ferner das Bestimmen eines Netzformats umfasst, das dem Eisenbahnnetz entspricht, indem es jedes modellierte Schienenwegsegment einem oder mehreren Eisenbahnnetzelementen zuordnet.

11. Verfahren nach einem der vorhergehenden Ansprüche, **dadurch gekennzeichnet, dass** der Schritt zum Definieren von angrenzenden Objekten und Zuordnen zwischen einem angrenzenden Objekt und einem oder mehreren modellierten Segmenten die Schritte umfasst, bestehend aus:

- Unterabtasten der der angrenzenden Umgebung zugeordneten Messpunkte durch einen vordefinierten Unterabtastfaktor,
- Umwandeln der unterabgetasteten Messpunkte in einen oder mehrere angrenzende Objekte,
- Zuordnen der angrenzenden Objekte zu den modellierten Schienenwegsegmenten.

12. Verfahren nach einem der vorhergehenden Ansprüche, **dadurch gekennzeichnet, dass** Navigationssignalausbreitungseigenschaften jeder Zuordnung zwischen einem angrenzenden Objekt und einem oder mehreren modellierten Segmenten als Funktion einer Vielzahl von Parametern zugewiesen werden, umfassend die Höhe des angrenzenden Objekts und den Abstand, der das angrenzende Objekt von der Mittelachse des modellierten Segments trennt.

13. System zum Lokalisieren, in einem Eisenbahnbezugssystem, eines mobilen Fahrzeugs, das sich auf Schienenwegen eines Eisenbahnnetzes bewegt, umfassend eine Lokalisierungsvorrichtung (101), die dafür konfiguriert ist:

- Lokalisierungsparameter zu bestimmen, die der Position des mobilen Fahrzeugs in einem geographischen Bezugssystem zugeordnet sind, anhand einer Vielzahl von Navigationssignalen eines GNSS- oder GPS-Systems, die von dem mobilen Fahrzeug empfangen werden,
- ein oder mehrere Schienenwegsegmente zu bestimmen, auf denen das mobile Fahrzeug wahrscheinlich lokalisiert wird, durch Abfragen einer kartographischen Datenbank anhand mindestens eines der Lokalisierungsparameter,
- das mobile Fahrzeug anhand der Schienenwegsegmente zu lokalisieren, die von der kartographischen Datenbank und mindestens einem der Lokalisierungsparameter bereitgestellt werden,
**dadurch gekennzeichnet, dass** die kartographische Datenbank Daten, die eine Vektorbeschreibung von mindestens einem Schienenweg des Eisenbahnnetzes darstellen, und Daten, die eine Beschreibung von einem oder mehreren Objekten der Umgebung angrenzend an die Schienenwege des Eisenbahnnetzes darstellen, die wahrscheinlich die von dem mobilen Fahrzeug empfangenen Navigationssignale stören, umfasst, und dass das Lokalisierungssystem (100) ferner eine Einheit zum Erzeugen von kartographischen Datenbanken (91) einschließt, umfassend:

- ein Empfangsmodul, das dafür konfiguriert ist, eine Messpunktwolke zu empfangen, die in einem Koordinatensystem klassifiziert und geolokalisiert ist, wobei die Messpunktwolke dem Eisenbahnnetz und der angrenzenden Umgebung zugeordnet ist,
- ein Topologiebestimmungsmodul, das dafür konfiguriert ist, die Topologie des Eisenbahnnetzes anhand von geolokalisierten und klassifizierten Messpunkten, die dem Eisenbahnnetz zugeordnet sind, und einer Vielzahl von zusätzlichen Elementen des Eisenbahnnetzes zu bestimmen,
- ein Modelliermodul, das dafür konfiguriert ist, die Geometrie der Schienenwege des Eisenbahnnetzes in eine Vielzahl von modellierten Schienenwegsegmenten zu modellieren, wobei das Modellieren der Geometrie der Mittelachse eines Schienenwegs, dargestellt durch einen georäumlichen Vektor, Folgendes umfasst:

i. ein Bestimmen eines aktuellen analytischen Modells der Geometrie der Mittelachse des Schienenwegs, dargestellt durch einen georäumlichen Vektor, unter Verwendung mindestens einer analytischen Gleichung,

ii. ein Messen der Standardabweichung zwischen der Mittelachse des Schienenwegs und der zugeordneten Kurve, die von dem analytischen Modell zurückgesendet wird,
iii. ein Teilen des georäumlichen Vektors in zwei Elemente, wenn die gemessene Standardabweichung über einem vordefinierten Fehlerschwellenwert liegt,

eine Reiteration des Bestimmens (i), des Messens (ii) und des Teilens (iii), solange eine Standardabweichung zwischen dem analytischen Modell und dem georäumlichen Vektor über dem vordefinierten Fehlerschwellenwert liegt;

- ein Bestimmungsmodul für angrenzende Objekte, das dafür konfiguriert ist, anhand von geolokalisierten und klassifizierten Messpunkten, die der angrenzenden Umgebung zugeordnet sind, ein oder mehrere angrenzende Objekte zu bestimmen, wobei jedes der angrenzenden Objekte einem oder mehreren modellierten Schienenwegsegmenten zugeordnet ist,
- ein Identifizierungsmodul, das dafür konfiguriert ist, für jede Zuordnung zwischen einem angrenzenden Objekt und einem oder mehreren modellierten Schienenwegsegmenten Informationen zu identifizieren, die die Störungen darstellen, von denen die Navigationssignale betroffen sind.

## Claims

1. A method for locating, in a railroad reference frame, a mobile vehicle traveling on railroad tracks of a railroad network, comprising the steps of:

- determining location parameters associated with the position of the mobile vehicle in a geographical reference frame based on a plurality of navigation signals of a GNSS or GPS system received by said mobile vehicle,
- determining one or more railroad track segments on which the mobile vehicle is likely to be located by querying a cartographic database based on at least one of the location parameters,
- locating the mobile vehicle based on the railroad track segments provided by the cartographic database and at least one of the location parameters,
said cartographic database comprising data representing a vectorial description of at least one railroad track of the railroad network and data representing a description of one or more objects of the environment adjacent to the railroad tracks of the railroad network likely to interfere with the navigation signals received by said mobile vehicle, the method comprising a step of generating said cartographic database comprising the steps of:

- receiving (201) a measurement point cloud classified and geolocated in a coordinate system, said measurement point cloud being associated with said railroad network and with said adjacent environment,
- determining (203) the topology of said railroad network based on geolocated and classified measurement points associated with said railroad network and a plurality of additional elements of said railroad network,
- modelling (204) the geometry of the railroad tracks of said railroad network as a plurality of modelled railroad track segments, the step of modelling the geometry of the median axis of a railroad track represented by a geospatial vector comprises one or more iterations of the following steps:

i. determining a current analytical model of the geometry of the median axis of the railroad track represented by a geospatial vector using at least one analytical equation,
ii. measuring the standard deviation between the median axis of the railroad track and the associated curve returned by the analytical model,
iii. dividing the geospatial vector into two elements if the measured standard deviation is greater than a predefined error threshold,

steps i. to iii. being iterated for as long as a standard deviation between the analytical model and the geospatial vector is greater than the predefined error threshold.

- determining (205), from geolocated and classified measurement points associated with said adjacent environment, one or more adjacent objects, each of said adjacent objects being associated with one or more modelled railroad track segments,
- identifying (206), for each association between an adjacent object and one or more modelled railroad track segments, information representing the interference that said navigation signals are subjected to.

2. The method according to claim 1, **characterised in that** it further comprises a step of saving the elements comprising the modelled railroad track segments, the additional elements of the railroad network, and/or the adjacent objects in files having a given representation format.

3. The method according to claim 1, **characterised in that** said additional elements of the railroad network comprise junctions and stopping points.

4. The method according to one of the preceding claims, **characterised in that** the geolocated and classified measurement point cloud is received from at least one mobile topography system associated with a hybrid geolocation system comprising a location device associated with an inertial unit.

5. The method according to one of the preceding claims, **characterised in that** said location parameters comprise a position in three dimensions, a movement speed and/or an orientation parameter.

6. The method according to one of the preceding claims, **characterised in that** said step of determining the topology of the railroad network comprises the steps of:

   - transforming elements of said geolocated point clouds associated with said railroad network into a plurality of geospatial vectors, each of the geospatial vectors corresponding to a railroad track,
   - subdividing said railroad network by defining, for each geospatial vector, a plurality of elements comprising junctions and/or stopping points.

7. The method according to claim 6, **characterised in that** each railroad track comprises two lines of rails, and **in that** the step of vectorising said geolocated and classified measurement point cloud associated with the ground and with the railroad tracks into a plurality of geospatial vectors comprises the steps of:

   - identifying the points of said geolocated point cloud that are associated with a chosen rail line of the railroad track,
   - subsampling said identified points using a predefined subsampling factor,
   - grouping the subsampled points into a plurality of subsets of points, two successive subsets of points sharing at least one measurement point,
   - calculating the average position in three dimensions of each subset of points using a moving average,
   - creating a vector associated with the chosen rail line comprising the calculated average positions in three dimensions,
   - eliminating those components of the created vector which are likely to be affected by noise from an automated classification, which provides a geospatial vector,
   - determining the one or more vectors associated with the other rail line of the railroad track based on the geospatial vector determined for the selected rail, and
   - calculating the geospatial vector associated with the median axis of the railroad track.

8. The method according to claim 7, **characterised in that** each geospatial vector further comprises orientation, slope and cant measurements extracted from each subset of identified points.

9. The method according to claim 6, **characterised in that** the subdivision step uses a graph comprising a set of edges, and nodes connecting the edges, the edges representing railroad tracks associated with geospatial vectors and the nodes representing junctions or stopping points on the rail network.

10. The method according to one of the preceding claims, **characterised in that** it further comprises determining a network format corresponding to said railroad network by associating each modelled railroad track segment with one or more elements of the railroad network.

11. The method according to one of the preceding claims, **characterised in that** the step of defining adjacent objects and of associating between an adjacent object and one or more modelled segments comprises the steps of:

   - subsampling the measurement points associated with the adjacent environment by a predefined subsampling factor,
   - transforming the subsampled measurement points into one or more adjacent objects,
   - associating the adjacent objects with the modelled railroad track segments.

**12.** The method according to one of the preceding claims, **characterised in that** navigation signal propagation properties are assigned to each association between an adjacent object and one or more modelled segments as a function of a plurality of parameters comprising the height of the adjacent object and the distance separating the adjacent object from the median axis of the modelled segment.

**13.** A system for locating, in a railroad reference frame, a mobile vehicle traveling on railroad tracks of a railroad network, comprising a location device (101) configured for:

- determining location parameters associated with the position of the mobile vehicle in a geographical reference frame based on a plurality of navigation signals of a GNSS or GPS system received by said mobile vehicle,
- determining one or more railroad track segments on which the mobile vehicle is likely to be located by querying a cartographic database based on at least one of the location parameters,
- locating the mobile vehicle based on the railroad track segments provided by the cartographic database and at least one of the location parameters,

**characterised in that** said cartographic database comprising data representing a vectorial description of at least one railroad track of the railroad network and data representing a description of one or more objects of the environment adjacent to the railroad tracks of the railroad network likely to interfere with said navigation signals received by said mobile vehicle, and **in that** the location system (100) further includes a unit for generating cartographic databases (91) comprising:

- a receiving module configured to receive a measurement point cloud classified and geolocated in a coordinate system, said measurement point cloud being associated with said railroad network and with said adjacent environment,
- a topology-determining module configured to determine the topology of said railroad network based on geolocated and classified measurement points associated with said railroad network and a plurality of additional elements of said railroad network,
- a modelling module configured to model the geometry of the railroad tracks of said railroad network as a plurality of modelled railroad track segments, where modelling the geometry of the median axis of a railroad track represented by a geospatial vector comprises:

i. a determination of a current analytical model of the geometry of the median axis of the railroad track represented by a geospatial vector using at least one analytical equation,
ii. performing a measurement the standard deviation between the median axis of the railroad track and the associated curve returned by the analytical model,
iii. performing a division of the geospatial vector into two elements if the measured standard deviation is greater than a predefined error threshold,

reiterating the steps of determining (i), measuring (ii) and dividing (iii) for as long as a standard deviation between the analytical model and the geospatial vector is greater than the predefined error threshold,

- a module for determining adjacent objects, configured to determine, from geolocated and classified measurement points associated with said adjacent environment, one or more adjacent objects, each of said adjacent objects being associated with one or more modelled railroad track segments,
- an identifying module configured to identify, for each association between an adjacent object and one or more modelled railroad track segments, information representing the interference that said navigation signals are subjected to.

101

**100**

Dispositif de navigation

103

Dispositif de pistage

102

Base de
données

# Figure 1

Recevoir un nuage de points (1) de mesure géo-
localisé, classifié (2) trajectoire du système
d'acquisition (3)Points géolocalisés des aiguillages
201

Séparer dans le nuage de points le sol du reste des
objets
202

Déterminer la topologie du réseau
203

Modélisation de la géométrie des voies
204

Réaliser l'association objet-segment
205

**Figure 2**
Caractériser l'environnement adjacent
206

**Figure 3**

| Sélectionner un fil de rail de la voie ferrée | 401 |

| Sous-échantillonner les points de mesure | 402 |

| Regrouper les points de mesure en sous-ensemble | 403 |

| Calculer la position moyenne de chaque sous-ensemble | 404 |

| Créer un vecteur en trois dimensions du premier rail | 405 |

| Filtrer les points du vecteur du premier rail | 406 |

| Créer le vecteur en trois dimensions du deuxième rail | 407 |

**Figure 4**

| Calculer le vecteur de l'axe médian de la voie | 408 |

Segment complet

501 Modélisation

503 Division en sous-segments

502 Comparaison avec un seuil d'erreur

Erreur > seuil

Erreur ≤ seuil

504 Retourner le segment complet modélisé

**Figure 5**

**Figure 6**

**Figure 7**

**Condition pour NLOS :**
(H1 - 4m) / D1 > tg(elev)
ET
(H2 - 4m) / D2 > tg(elev)
ET
tg(elev) > (H2 - H1)/(D1 + D2)

## Figure 8

<u>900</u>

91

100

| | | |
|---|---|---|
| **Module de réception (9101)** | **Comparateur de risques (9111)** | |
| **Module de détermination de topologie (9102)** | **Module d'enregistrement d'alerte (9112)** | **Dispositif de Localisation** |
| **Module de modélisation (9104)** | **Analyseur d'alerte (9113)** | |
| **Module de détermination d'objets adjacents (9104)** | **Module d'association (9114)** | |

102

## <u>Figure 9</u>

# EP 4 028 795 B1

## RÉFÉRENCES CITÉES DANS LA DESCRIPTION

**Documents brevets cités dans la description**

- GB 2480102 A